Europäisches Patentamt

European Patent Office

Office européen des brevets

(19)

(11) EP 1 486 459 A2

(12) **DEMANDE DE BREVET EUROPEEN**

(43) Date de publication:
**15.12.2004 Bulletin 2004/51**

(51) Int Cl.$^7$: **C01B 11/02**, C25B 1/22

(21) Numéro de dépôt: **04291474.7**

(22) Date de dépôt: **11.06.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **11.06.2003 FR 0306996**

(71) Demandeurs:
• **Electricité de France Service National**
  **75008 Paris (FR)**
• **Thetis Environnement**
  **38230 Charvieu Chavagneux (FR)**

(72) Inventeurs:
• **Bulteau, Olivier**
  **77380 Combs La ville (FR)**

• **Lelong, Guillaume**
  **77250 Moret-sur-Loing (FR)**
• **Baticle, Pascal**
  **77140 Nonville (FR)**
• **Chhim, Norinda**
  **77670 Saint-Mames (FR)**
• **Dubost, Charles**
  **38230 Chavanoz (FR)**
• **Rouanet, Sylvain**
  **38230 Pont Cheruy (FR)**

(74) Mandataire: **Doressamy, Clarisse**
  **Cabinet Plasseraud**
  **65/67 rue de la Victoire**
  **75440 Paris Cedex 09 (FR)**

(54) **Procede et dispositif de preparation de dioxyde de chlore**

(57) L'invention concerne un procédé de préparation de $ClO_2$ comprenant :

a) Une préparation d'acide par électrochimie dans une première zone (2) à cathode (3) présente dans un compartiment cathodique (3), à anode (5) présente dans un compartiment anodique (29), et à séparateur hydraulique (4), ne présentant aucune sélectivité ionique, en un seul passage dans le compartiment anodique (29), comprenant au moins une alimentation dans le compartiment anodique (29) d'eau et de sel spectateur, et permettant l'obtention d'un effluent anodique (9) comprenant $H^+$ et $O_2$ gazeux,
b) Une séparation (12) gaz-liquide de l'effluent anodique (9), permettant l'obtention en continu d'un effluent anodique (15) comprenant $H^+$ et exempt d'$O_2$ gazeux,
c) Une préparation de $ClO_2$ par voie chimique dans une seconde zone (13), à partir de l'effluent anodique (15) de l'étape b) et d'une solution (16) comprenant $ClO_2^-$.

Dispositif (1) destiné à être utilisé dans un tel procédé.

FIG. 1

EP 1 486 459 A2

## Description

L'invention concerne un procédé de préparation de dioxyde de chlore. L'invention concerne aussi un dispositif destiné généralement à la mise en oeuvre d'un tel procédé.

Aujourd'hui il existe essentiellement deux voies de préparation du dioxyde de chlore. Une première voie est une voie chimique qui donne lieu à l'utilisation et à la manipulation de réactifs dangereux : eau oxygénée concentrée et/ou acide sulfurique concentré, chlore gazeux, chlorate de soude, acide chlorhydrique, chlorite de sodium. Une seconde voie est une voie électrochimique qui utilise essentiellement un seul réactif : le chlorite de sodium qui est transformé en dioxyde de chlore. Il existe une littérature abondante à propos de ces deux voies de préparation du dioxyde de chlore, qu'il soit question de réduction de chlorate ou d'oxydation de chlorite.

La quasi-totalité des installations de préparation de dioxyde de chlore le produisent par des voies chimiques mettant en oeuvre la réaction :

$$5\ ClO_2^- + 4\ H^+ \leftrightarrows 4\ ClO_2\ (g) + Cl^- + 2\ H_2O.$$

S'ils sont mélangés accidentellement, les deux réactifs, que sont le chlorite de sodium et l'acide généralement sous forme d'acide chlorhydrique, produisent un dégazage de dioxyde de chlore mortel et explosif à plus de 10% dans l'air. Aussi ces installations doivent faire l'objet de déclaration et sont soumises à des restrictions applicables aux installations classées pour la protection de l'environnement. Les taux de conversion sont typiquement de 92 à 95% en poids (m/m) par rapport au chlorite de sodium.

Quant aux installations électrochimiques, la génération de dioxyde de chlore par électrolyse en exploitant la réaction :

$$ClO_2^- \rightarrow ClO_2 + e^-$$

est connue depuis longtemps. Toutefois, le taux de conversion de ce type d'électrolyse est limité par la diffusion des ions chlorite en solution. Ainsi on arrive difficilement à des taux de conversion supérieurs à 60% pour des vitesses d'électrolyse suffisantes pour les besoins industriels. De plus la nature des réactions électrochimiques utilisées habituellement conduit à la formation de dioxyde de chlore mais également de carbonate de calcium. Ce dernier se dépose au sein du réacteur électrochimique, en particulier au sein du compartiment cathodique où le pH est élevé mais également au sein des membranes ioniques. De plus, ce type de dépôt, très adhérent, ne permet pas d'assurer la stabilité des débits de production. Enfin le calcium libre présent dans l'eau empoisonne rapidement la(les) membrane(s) à sélectivité ionique utilisée(s) généralement dans ce type de réacteur qu'il peut détruire ainsi, et conduit à une dégradation rapide du rendement de préparation du dioxyde de chlore. Il est donc nécessaire d'assurer une alimentation en eau adoucie du générateur. Malgré la qualité de cette eau d'alimentation, le problème persiste. Cela conduit généralement à une robustesse limitée du système et rend nécessaire le remplacement préventif des cellules électrochimiques.

Le procédé et le dispositif selon l'invention permettent de pallier les problèmes décrits précédemment. L'utilisation d'un générateur électrochimique pour générer l'acide nécessaire à la préparation par voie chimique du dioxyde de chlore, ledit générateur comportant un circuit hydraulique unique et ne comportant pas de membrane à sélectivité ionique particulière, permet avantageusement une production de dioxyde de chlore compatible avec les démarches de sécurité sanitaire engagées par les pouvoirs publics dans le domaine du traitement des eaux, grâce à une conversion rapide de la quasi totalité du chlorite de sodium en dioxyde de chlore sans formation de sous-produits indésirables.

Ainsi, le procédé selon l'invention est un procédé de préparation de dioxyde de chlore ($ClO_2$) comprenant :

a) Une préparation d'acide par voie électrochimique dans une première zone de travail comprenant une cathode présente dans un compartiment cathodique de ladite première zone de travail, une anode présente dans un compartiment anodique de ladite première zone de travail, et un séparateur hydraulique, ne présentant aucune sélectivité ionique, mettant principalement en oeuvre une réaction d'électrolyse de l'eau en un seul passage dans le compartiment anodique, comprenant au moins une, de préférence une seule, alimentation dans le compartiment anodique d'eau et de (solution de) sel spectateur, et permettant l'obtention en continu d'un effluent anodique comprenant des ions $H^+$ et de l'oxygène gazeux, et d'un effluent cathodique comprenant des ions OH- et de l'hydrogène gazeux,
b) Une séparation gaz-liquide de l'effluent anodique de la première zone de travail, permettant l'obtention d'un effluent anodique comprenant des ions $H^+$ et pratiquement exempt d'oxygène gazeux,
c) Une préparation de dioxyde de chlore par voie chimique dans une seconde zone de travail, à partir de l'effluent anodique de l'étape b) et d'au moins une solution comprenant des sels de chlorite $ClO_2^-$, mettant principalement en oeuvre la réaction :

$$5\ ClO_2^- + 4\ H^+ \leftrightarrows 4\ ClO_2\ (g) + Cl^- + 2\ H_2O.$$

Cela permet d'obtenir un effluent liquide final légèrement acide, c'est-à-dire de pH généralement de 3 à 4, et contenant du dioxyde de chlore $ClO_2$ dissous.

De préférence selon l'invention, la concentration dudit effluent liquide final est ajustée pour une plus grande stabilité, par exemple à environ 0,5 g/l. Cette dilution permet avantageusement de ralentir la dissociation de dioxyde de chlore en chlorure et chlorate. Les solutions ainsi obtenues sont généralement stables pendant plusieurs heures.

De préférence le compartiment anodique comprend un espace libre pour la circulation d'effluent en son sein.

Par « séparateur ne présentant aucune sélectivité ionique », on entend selon l'invention séparateur tel que les ions contenus dans la solution d'alimentation, qui comprend généralement au moins l'eau et la solution de sel spectateur, puissent pratiquement totalement traverser librement de part et d'autre ledit séparateur. De préférence selon l'invention, ledit séparateur présente une perméabilité ionique, c'est-à-dire présente une perméabilité ionique élevée (mais pas de sélectivité ionique) tout en limitant l'échange de flux entre les deux compartiments de l'électrolyseur. Cela différencie notablement l'invention de l'art antérieur. L'absence de sélectivité ionique du séparateur selon l'invention correspond à une absence de quantification.

L'alimentation du compartiment anodique en eau se fait par une canalisation unique ou au moins deux canalisations, dans le cadre du circuit hydraulique unique selon l'invention. Par « circuit hydraulique unique », on entend selon l'invention que la première zone de travail ne comporte qu'une seule entrée d'alimentation.

Avantageusement, l'utilisation d'un séparateur hydraulique ne présentant aucune sélectivité ionique, permet d'éviter les problèmes d'utilisation de membranes de l'art antérieur. En particulier, le dépôt de carbonate de calcium est avantageusement et de façon surprenante pratiquement limité à la proximité de l'anode, ce qui a pour effet d'augmenter la robustesse de la première zone de travail. De façon particulièrement avantageuse, il est donc possible de procéder à la préparation du dioxyde de chlore par voie chimique selon l'étape c) du procédé de l'invention, en ayant synthétisé les espèces considérées comme dangereuses in-situ au cours de l'étape a), et en particulier en ayant évité le stockage d'acide à proximité de chlorite de sodium. Vus les faibles volumes en jeu, la présence transitoire de ces produits n'est pas considérée comme dangereuse.

Il est aussi possible de procéder dans une étape supplémentaire à une séparation gaz-liquide de l'effluent cathodique de la première zone de travail permettant l'obtention d'un effluent cathodique comprenant des ions OH⁻ et pratiquement exempt d'hydrogène gazeux. Ledit effluent est avantageusement mélangé avec l'effluent liquide final, comprenant le dioxyde de chlore, afin d'en relever le pH, typiquement avant stockage, et/ou de diluer ledit effluent liquide final. En effet, un pH plus près de la neutralité ralentit la vitesse de dissociation du dioxyde de chlore. Après un tel mélange, le pH est de façon générale de 4 à 6. Dans un tel cas, le procédé selon l'invention ne génère donc aucun rejet alcalin.

En référence aux considérations générales de chimie, les ions d'acides ou protons s'écrivent $H^+$ selon l'invention. De tels ions solvatés s'écrivent bien entendu $H_3O^+$ selon la nomenclature en vigueur. Selon l'invention il n'est pas fait de distinction entre ces deux espèces ioniques $H^+$ et $H_3O^+$.

De façon générale, après séparation gaz-liquide, l'oxygène gazeux présent dans l'effluent anodique est dissous dans ledit effluent.

La préparation du dioxyde de chlore par voie chimique dans la seconde zone de travail se fait de façon classique pour l'homme du métier, tel que décrit par exemple dans W. MASSCHELEIN, *Les oxydes de chlore et le chlorite de sodium, Dunod (1969)*. A titre indicatif, une telle préparation se réalise en présence d'un catalyseur généralement solide, plus généralement en présence d'un catalyseur contenant du platine. Pour cette étape il convient généralement de respecter un temps de contact suffisant pour assurer un rendement maximum à la réaction. Ainsi qu'il est connu de W. MASSCHELEIN, *Journal AWWA,* p. 76 *(1984),* le temps de contact optimum est de 3 à 10 minutes.

Comme explicité précédemment, l'absence de membrane ionique dans la première zone de travail selon l'invention permet de façon très avantageuse une alimentation directe par l'eau du réseau quelle qu'en soit la dureté. La durée de vie ainsi que la disponibilité opérationnelle de la première zone de travail se trouve accrue. Cela conduit à une robustesse importante du procédé de production de dioxyde de chlore selon l'invention ce qui rend son utilisation en procédure industrielle très avantageuse.

D'autre part, l'alimentation préférée en solution dans la première zone de travail selon l'invention par une seule entrée permet de faciliter la conduite de ladite première zone. Ordinairement, dans les documents de l'art antérieur, tel que le brevet US-A-4.432.856 et/ou le brevet US-A-4.248.681, il existe autant de circuit hydraulique que de compartiments dans le générateur électrochimique. Selon l'invention, la circulation du fluide qui alimente le compartiment cathodique est utilement réalisée au travers du séparateur par le fluide qui alimente le compartiment anodique. Généralement et de préférence, l'effluent cathodique est pratiquement exempt de gaz, c'est-à-dire généralement de bulles de gaz, avant rejet. Ainsi, le pilotage de l'électrolyse de l'étape a), dans la première zone de travail, est uniquement réalisé généralement en contrôlant un débit de circulation de liquide dans ladite première zone et en imposant un courant d'électrolyse correspondant, en particulier dans le cas préféré de la présence d'un espace libre de circulation d'effluent au sein du compartiment anodique. Cela est particulièrement simple et très avantageux à réaliser pour l'homme du métier.

Selon l'invention, le sel spectateur est un sel « neutre » pour la réaction chimique de formation de dioxyde de chlore. Un tel sel ne doit généralement pas être électroactif à la surface des électrodes, et il ne sert généralement qu'à la conductivité électrique de la solution d'alimentation. Le choix des chlorures comme sel support est à écarter selon l'invention afin de limiter avantageusement le nombre d'espèces chlorées synthétisées au dioxyde de chlore. Dans un mode de réalisation de l'invention, ledit sel spectateur comprend au moins du sulfate de sodium.

Selon l'invention, la cathode est généralement une cathode volumique comprenant au moins un matériau choisi dans le groupe formé par les électrodes volumiques, parmi lesquelles on peut trouver la mousse de nickel, la mousse de zinc, le feutre de carbone, les billes de graphite, généralement sous la forme de granules ou bien d'éponge, et leurs mélanges. Lesdits mélanges sont parfois des sous-produits de combustion et/ou de distillation de produits organiques.

Selon la présente invention, l'anode est généralement une anode comprenant au moins un métal déployé, ledit métal déployé comprenant au moins un substrat en titane recouvert au moins partiellement, de préférence pratiquement totalement, d'au moins un dépôt d'au moins un oxyde choisi dans le groupe formé par l'iridium, le platine, le ruthénium, le tantale et leurs mélanges.

Le séparateur selon l'invention comprend généralement au moins un matériau choisi parmi les fibres de verre, les céramiques tels que les composés de silice et d'alumine, les fibres polymères, tissées ou non, et leurs mélanges tels que les polypropylènes et les polyéthylènes. Cela le différence notablement des membranes ioniques de l'art antérieur qui ont un greffage de surface, auquel cas au moins une molécule chimique est fixée à la surface de la membrane et l'on sélectionne les ions qui la traversent par le choix de ladite molécule chimique.

L'invention concerne aussi un dispositif destiné à une préparation de dioxyde de chlore comprenant :

a) Au moins un réacteur électrochimique, destiné à une préparation d'acide, comprenant une cathode présente dans un compartiment cathodique dudit réacteur, ladite cathode étant au moins en partie, de préférence pratiquement totalement, une cathode volumique, une anode présente dans un compartiment anodique dudit réacteur, et un séparateur hydraulique, généralement présent au moins en partie, de préférence pratiquement totalement entre la cathode et l'anode, et ne présentant aucune sélectivité ionique, au moins un moyen d'alimentation en liquide du compartiment anodique, ledit liquide comprenant de préférence de l'eau, ledit réacteur permettant l'obtention d'un effluent anodique comprenant du liquide et du gaz, et d'un effluent cathodique comprenant du liquide et du gaz, ledit réacteur étant de forme sensiblement cylindrique et comprenant un récipient creux de forme sensiblement cylindrique généralement en acier inoxydable enfermant et au contact d'au moins la cathode volumique, ladite cathode volumique formant essentiellement un anneau extérieur de forme sensiblement cylindrique et creuse, s'appuyant au moins en partie, de préférence pratiquement totalement, sur ledit récipient, et à l'intérieur de laquelle s'appuie au moins en partie, de préférence pratiquement totalement, ledit séparateur de forme sensiblement cylindrique et creuse, à l'intérieur duquel s'appuie au moins en partie, de préférence pratiquement totalement, l'anode de forme sensiblement cylindrique et creuse, le compartiment anodique comprenant essentiellement ladite anode et un espace central sensiblement cylindrique de circulation de liquide,

b) Au moins un moyen de séparation gaz-liquide de l'effluent anodique du premier réacteur, permettant l'obtention en continu d'un effluent anodique liquide pratiquement exempt de gaz,

c) Au moins un réacteur chimique destiné à une préparation de dioxyde de chlore par voie chimique, comprenant au moins un moyen d'alimentation en l'effluent anodique liquide de l'étape b) et au moins un moyen d'alimentation en une autre solution liquide.

Le dispositif selon l'invention permet d'obtenir un effluent liquide final contenant du dioxyde de chlore $ClO_2$ dissous.

Avantageusement, un tel dispositif est démonté de façon relativement aisée et, en particulier, le réacteur électrochimique est formé d'éléments constitutifs indépendants les uns des autres. Ledit réacteur électrochimique est donc reconditionnable de nombreuses fois. C'est un des nombreux avantages de l'invention.

De préférence le réacteur électrochimique de l'invention ne comporte qu'un seul moyen d'alimentation en liquide par le compartiment anodique.

Le dispositif selon l'invention peut aussi comprendre au moins un moyen supplémentaire de séparation gaz-liquide de l'effluent cathodique de la première zone de travail permettant l'obtention d'un effluent cathodique liquide pratiquement exempt de gaz, avantageusement mélangé à l'effluent liquide final pour en permettre la dilution et/ou l'augmentation du pH tel qu'expliqué précédemment dans le cas du procédé selon l'invention.

Selon l'invention, la circulation de liquide s'effectue généralement et principalement dans le compartiment anodique, généralement par une alimentation unique dudit compartiment, et donc généralement du réacteur électrochimique -ou cellule d'électrolyse-. Pour cela, le choix selon l'invention d'un séparateur adéquat est important, mais la vitesse et le temps de séjour du liquide à la surface de l'anode, qui conditionnent le rendement de la synthèse des protons, sont aussi des paramètres importants. La circulation peut par ailleurs être assurée par tout moyen de pompage connu.

La cathode, l'anode et le séparateur sont généralement tels que décrits précédemment.

L'invention sera mieux comprise et d'autres caractéristiques et avantages apparaîtront à la lecture de la description qui va suivre, donnée à titre non limitatif, par référence aux figures 1 à 3.

La figure 1 représente de façon schématique un dispositif selon l'invention avec une vue partielle en coupe du premier réacteur électrochimique.

Les figures 2 et 3 représentent de façon schématique des diagrammes respectifs (pH, I, D) et (C, I, D) de l'exemple selon l'invention.

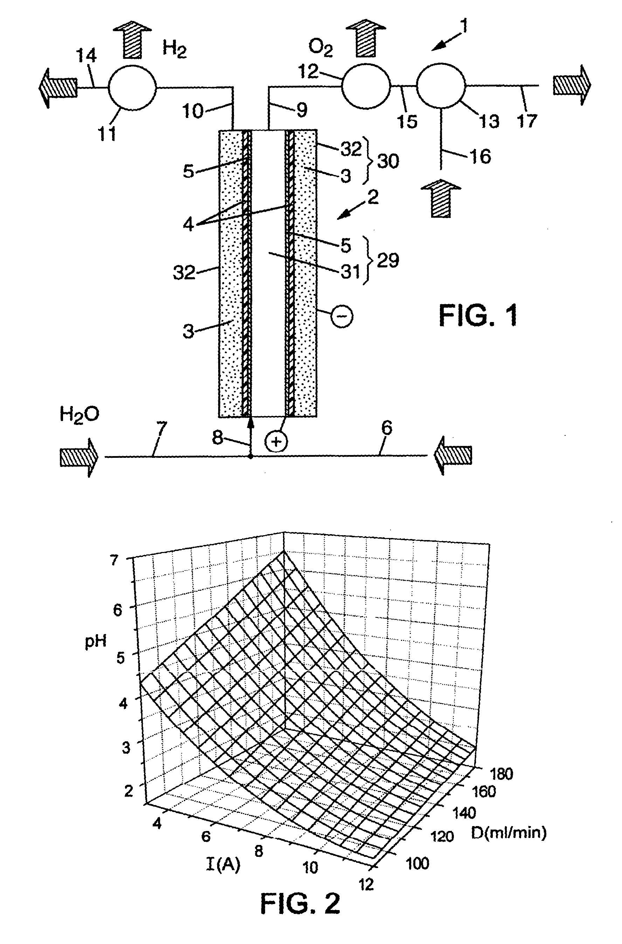

La figure 1 représente de façon schématique un dispositif 1 selon l'invention avec une vue partielle en coupe d'un réacteur 2 électrochimique. On y distingue le réacteur 2 électrochimique, un moyen 12 de séparation gaz-liquide de l'effluent anodique du premier réacteur, un moyen 11 de séparation gaz-liquide de l'effluent cathodique 10 du réacteur 2 électrochimique et un réacteur 13 chimique. Lors de l'utilisation d'un tel dispositif 1 pour la préparation du dioxyde de chlore, de l'eau arrive par le conduit 7 dans le sens indiqué par la flèche et une solution de sel spectateur arrive par le conduit 6. Les conduits 7 et 6 se rejoignent en un conduit 8 qui fournit un fluide d'alimentation du réacteur 2 électrochimique, en compartiment anodique 29. Le réacteur 2 électrochimique comprend les éléments suivants : un corps ou une enveloppe en inox 32 servant d'amenée de courant pour la cathode, une cathode 3 volumique, un séparateur hydraulique 4 et une anode 5. Le compartiment anodique 29 est constitué de l'anode 5, qui entoure un espace libre 31 qui sera principalement occupé par un fluide circulant au sein du réacteur 2 électrochimique, et dudit espace libre 31. La cathode 3 et ledit récipient 32 constituent un compartiment cathodique 30. Le réacteur 2 électrochimique ainsi que tous les éléments qu'il comporte sont de forme sensiblement cylindrique. Il est représenté en coupe sur la figure 1. Du premier réacteur 2 sortent deux effluents : un effluent anodique qui sort par le conduit 9 et un effluent cathodique qui sort par le conduit 10. L'effluent cathodique qui sort par le conduit 10 est évacué vers un moyen de séparation gaz-liquide 11 de l'effluent cathodique. Ceci permet l'obtention par un conduit 14 d'un effluent cathodique liquide exempt de bulles de gaz. L'effluent anodique est dirigé par le conduit 9 vers un moyen 12 de séparation gaz-liquide de l'effluent anodique, ce qui permet l'obtention d'un effluent anodique liquide exempt de bulles de gaz par un conduit 15. L'effluent anodique liquide exempt de bulles de gaz alimente le réacteur chimique 13 par le conduit 15. Le réacteur chimique 13 est d'autre part aussi alimenté en une autre solution liquide par un conduit 16. Le conduit 15 représente donc un moyen d'alimentation en l'effluent anodique de l'étape b) et le conduit 16 représente donc un moyen d'alimentation en une autre solution liquide. L'effluent final sort du réacteur 13 par une conduite 17. Il comprend du dioxyde de chlore gazeux dissous en milieu aqueux légèrement acide.

**Exemple**

L'exemple suivant sert à illustrer l'invention sans pour autant limiter la portée.

Dans l'exemple selon l'invention, l'effluent arrivant par le conduit 6 est du sulfate de sodium $Na_2SO_4$, et il sort du dispositif selon l'invention par le conduit 14 de la soude NaOH. L'effluent qui entre dans le réacteur chimique 13 par le conduit 16 est $NaClO_2$. L'effluent final qui quitte le dispositif selon l'invention comprend donc le produit fabriqué le dioxyde de chlore $ClO_2$ dissous, du $Na_2SO_4$, du NaCl et de l'eau $H_2O$.

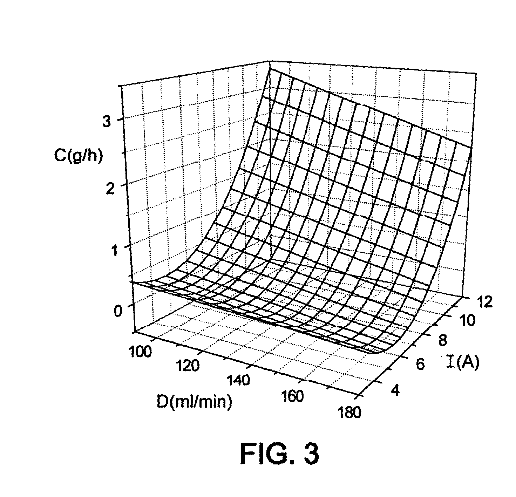

L'exemple présenté ici est issu d'un ensemble d'essais réalisés dans le cadre d'un plan d'expériences selon l'invention. Les graphiques des figures 2 et 3 donnés en exemple sont obtenus à partir d'un modèle mathématique du second degré construit à partir des expériences.

La cellule électrochimique comprend un corps ou cylindre creux en acier inoxydable ou inox, un séparateur en polyéthylène, une cathode en feutre de carbone, une anode en titane revêtu d'oxyde d'iridium ou anode DSA (pour « Dimensional Stable Anode »). Le sel spectateur est une solution concentrée de sulfate de sodium.

Cette cellule électrochimique permet de synthétiser des solutions acides dont le pH dépend du débit D, en ml/min, d'alimentation en solution de sulfate de sodium et de l'intensité d'électrolyse I, en Ampères, utilisée, ainsi que représenté sur la figure 2.

En combinaison avec une synthèse chimique de dioxyde de chlore, cette cellule électrochimique permet de synthétiser des solutions de dioxyde de chlore de concentration C, en g/l, en fonction du débit D, en ml/min, d'alimentation en solution de sulfate de sodium, et de l'intensité d'électrolyse I, en Ampères, ainsi que représenté sur la figure 3.

Avec un débit d'alimentation en sulfate de sodium de 90 ml/min, et sous un courant de 12 A, il a été montré selon l'invention qu'il est possible de produire à partir de la cellule électrochimique, de manière reproductible, une solution de pH 1,5, et de conduire ainsi à la synthèse de plus de 3 g/h de dioxyde de chlore

**Revendications**

**1.** Procédé de préparation de dioxyde de chlore comprenant :

a) Une préparation d'acide par voie électrochimique dans une première zone de travail (2) comprenant une cathode (3) présente dans un compartiment cathodique (3) de ladite première zone de travail (2), une anode (5) présente dans un compartiment anodique (29) de ladite première zone de travail (2), et un séparateur hydraulique (4), ne présentant aucune sélectivité ionique, mettant principalement en oeuvre une réaction d'électrolyse de l'eau en un seul passage dans le compartiment anodique (29), comprenant au moins une alimentation (8) dans le compartiment anodique (29) d'eau et de sel spectateur, et permettant l'obtention en continu d'un effluent anodique (9) comprenant des ions H$^+$ et de l'oxygène gazeux, et d'un effluent cathodique (10) comprenant des ions OH- et de l'hydrogène gazeux,
b) Une séparation (12) gaz-liquide de l'effluent anodique (9) de la première zone de travail (2), permettant l'obtention en continu d'un effluent anodique (15) comprenant des ions H$^+$ et pratiquement exempt d'oxygène gazeux,
c) Une préparation de dioxyde de chlore par voie chimique dans une seconde zone de travail (13), à partir de l'effluent anodique (15) de l'étape b) et d'une solution (16) comprenant des sels de chlorite ClO$_2^-$, mettant principalement en oeuvre la réaction :

$$5\ ClO_2^- + 4\ H^+ \leftrightarrows 4\ ClO_2\ (g) + Cl^- + 2\ H_2O.$$

2. Procédé selon la revendication 1 tel que l'on procède dans une étape supplémentaire à une séparation gaz-liquide de l'effluent cathodique de la première zone de travail permettant l'obtention d'un effluent cathodique comprenant des ions OH$^-$ et pratiquement exempt d'hydrogène gazeux, qui est ensuite mélangé à l'effluent liquide final.

3. Procédé selon l'une des revendications précédentes tel que ledit sel spectateur comprend au moins du sulfate de sodium.

4. Procédé selon l'une des revendications précédentes tel que le pilotage de l'électrolyse de l'étape a) est réalisé en contrôlant un débit de circulation de liquide dans la première zone de travail et en imposant un courant d'électrolyse correspondant.

5. Procédé selon l'une des revendications précédentes tel que la cathode (3) est une cathode (3) volumique comprenant au moins un matériau choisi dans le groupe formé par la mousse de nickel, la mousse de zinc, le feutre de carbone, les billes de graphite, et leurs mélanges.

6. Procédé selon l'une des revendications précédentes tel que l'anode (5) est une anode (5) comprenant au moins un métal déployé.

7. Procédé selon la revendication précédente tel que ledit métal déployé comprend au moins un substrat en titane recouvert au moins partiellement d'au moins un dépôt d'au moins un oxyde choisi dans le groupe formé par l'iridium, le platine, le ruthénium, le tantale et leurs mélanges.

8. Procédé selon l'une des revendications précédentes tel que le séparateur (4) comprend au moins un matériau choisi parmi les fibres de verre, les céramiques, les fibres polymères, tissées ou non, et leurs mélanges.

9. Procédé selon la revendication précédente tel que le séparateur (4) comprend au moins un matériau choisi parmi les fibres de verre, les composés de silice et d'alumine, les polypropylènes et les polyéthylènes.

10. Procédé selon l'une des revendications précédentes tel que le séparateur (4) présente une perméabilité ionique.

11. Dispositif (1) destiné à une préparation de dioxyde de chlore comprenant :

a) Au moins un réacteur (2) électrochimique, destiné à une préparation d'acide, comprenant une cathode (3) présente dans un compartiment cathodique (3) dudit réacteur (2), ladite cathode (3) étant au moins en partie une cathode volumique (3), une anode (5) présente dans un compartiment anodique (29) dudit réacteur (2), et un séparateur hydraulique (4), ne présentant aucune sélectivité ionique, au moins un moyen (8) d'alimentation en liquide du compartiment anodique (29), ledit réacteur (2) permettant l'obtention d'un effluent anodique (9) comprenant du liquide et du gaz, et d'un effluent cathodique (10) comprenant du liquide et du gaz, ledit réacteur (2) étant de forme sensiblement cylindrique et comprenant un récipient (32) creux de forme sensiblement cylindrique enfermant et au contact d'au moins la cathode (3) volumique, ladite cathode (3) volumique formant essentiellement un anneau extérieur de forme sensiblement cylindrique et creuse, s'appuyant au moins en partie sur ledit récipient (32), et à l'intérieur de laquelle s'appuie au moins en partie ledit séparateur (4) de forme sensiblement cylindrique et creuse, à l'intérieur duquel s'appuie au moins en partie l'anode (5) de forme sensiblement cylindrique et creuse, le compartiment anodique (29) comprenant essentiellement ladite anode (5) et un espace central (31) sensiblement cylindrique de circulation de liquide,
b) Au moins un moyen (12) de séparation gaz-liquide de l'effluent anodique (9) du premier réacteur, permettant l'obtention en continu d'un effluent anodique (15) liquide pratiquement exempt de gaz,

c) Au moins un réacteur (13) chimique destiné à une préparation de dioxyde de chlore par voie chimique, comprenant au moins un moyen (15) d'alimentation en l'effluent anodique liquide de l'étape b) et au moins un moyen (16) d'alimentation en une autre solution liquide.

**12.** Dispositif (1) selon la revendication précédente tel que la circulation de liquide s'effectue principalement dans le compartiment anodique (29) par une alimentation unique dudit compartiment (29).

**13.** Dispositif (1) selon l'une des revendications 11 ou 12 tel que la cathode (3) est une cathode (3) volumique comprenant au moins un matériau choisi dans le groupe formé par la mousse de nickel, la mousse de zinc, le feutre de carbone, les billes de graphite, et leurs mélanges.

**14.** Dispositif (1) selon l'une des revendications 11 à 13 tel que l'anode (5) est une anode (5) comprenant au moins un métal déployé.

**15.** Dispositif (1) selon la revendication précédente tel que ledit métal déployé comprend au moins un substrat en titane recouvert au moins partiellement d'au moins un dépôt d'au moins un oxyde choisi dans le groupe formé par l'iridium, le platine, le ruthénium, le tantale et leurs mélanges.

**16.** Dispositif (1) selon l'une des revendications 11 à 15 tel que le séparateur (4) comprend au moins un matériau choisi parmi les fibres de verre, les céramiques, les fibres polymères, tissées ou non, et leurs mélanges.

**17.** Dispositif (1) selon la revendication précédente tel que le séparateur (4) comprend au moins un matériau choisi parmi les fibres de verre, les composés de silice et d'alumine, les polypropylènes et les polyéthylènes.

**18.** Dispositif (1) selon l'une des revendications 11 à 17 tel que le séparateur (4) présente une perméabilité ionique.

**19.** Dispositif (1) selon l'une des revendications 11 à 18 destiné à être utilisé dans un procédé selon l'une des revendications 1 à 10.

FIG. 1

FIG. 2

FIG. 3